# FASCICULE DE BREVET EUROPEEN

(11) **EP 2 647 081 B1**
(45) Date de publication et mention de la délivrance du brevet: **22.01.2020**
(21) Numéro de dépôt: 11845009.7
(22) Date de dépôt: 28.11.2011
(51) Int. Cl.: H01M 4/134, H01M 4/1395, H01M 12/08, H01M 4/40, H01M 4/38

(54) **BATTERIE LITHIUM-AIR**
LITHIUM-LUFT-BATTERIE
LITHIUM-AIR BATTERY

(30) Priorité: 01.12.2010 CA 2724307
(43) Date de publication de la demande: 09.10.2013
(73) Titulaire: Hydro-Québec, Montréal QC H2Z 1A4 (CA)
(72) Inventeur: ZAGHIB, Karim, Longueuil, Québec J4N 1T8 (CA); TROTTIER, Julie, Mirabel, Québec J7J 1H4 (CA); GUERFI, Abdelbast, Brossard, Québec J4X 1W2 (CA)
(74) Mandataire: Lang, Johannes
(86) Numéro de dépôt international: PCT/CA2011/050737
(87) Numéro de publication internationale: WO 2012/071668

(56) Documents cités:
- WO-A1-2010/061451
- JP-A- 2010 198 798
- US-A- 5 487 959
- US-A1- 2004 081 894
- US-A1- 2005 186 469
- US-A1- 2010 273 066
- US-A1- 2011 165 462
- US-B2- 7 771 870
- TAKAHITO ITOH ET AL: "Polymer electrolytes based on hyperbranched polymers", JOURNAL OF POWER SOURCES, ELSEVIER SA, CH, vol. 97, 28 décembre 2000 (2000-12-28), pages 637-640, XP028142878, ISSN: 0378-7753, DOI: 10.1016/S0378-7753(01)00578-X [extrait le 2011-02-15]
- JOON-HO SHIN ET AL: "Ionic liquids to the rescue? Overcoming the ionic conductivity limitations of polymer electrolytes", ELECTROCHEMISTRY COMMUNICATIONS, ELSEVIER, AMSTERDAM, NL, vol. 5, no. 12, 1 décembre 2003 (2003-12-01), pages 1016-1020, XP008118459, ISSN: 1388-2481, DOI: 10.1016/J.ELECOM.2003.09.017 [extrait le 2003-10-21]

## Description

La présente invention concerne un procédé d'élaboration d'une batterie lithium-air, ainsi que la batterie obtenue.

### ÉTAT DE LA TECHNIQUE

Une batterie dite « lithium-air » est une batterie comprenant une électrode négative et une électrode positive séparées par un électrolyte. Chacune des électrodes est sous forme d'un film mince. L'électrode négative est généralement constituée par un film de métal choisi parmi le lithium et les alliages de lithium. L'électrode positive comprend du carbone poreux et éventuellement un catalyseur. Une batterie « lithium-air » fonctionne par réaction entre l'oxyde de l'air (agissant en tant que matière active d'électrode positive) et le lithium de l'électrode négative. L'électrolyte peut être un électrolyte solide polymère, un électrolyte liquide imprégnant un séparateur ou une céramique. Une batterie lithium-air fonctionne sur la base des réactions suivantes qui se produisent à l'électrode positive :

O₂ + 2 e⁻⇆ O₂²⁻

2 Li⁺ + O₂²⁻ ⇆ Li₂O₂

Une batterie lithium-air est donc parfaitement adaptée pour fonctionner dans un milieu ambiant, en contact avec l'air.

Lors de la 1^{ère} décharge d'une batterie lithium-air, les réactions à l'électrode positive sont O₂ + 2 e⁻ → O₂²⁻ et 2 Li⁺ + O₂²⁻ → Li₂O₂, ces réactions étant favorisées par la présence d'un catalyseur (en particulier MnO₂) dans le matériau de l'électrode. En même temps, la réaction à l'électrode négative est 2 Li → 2 Li⁺ + 2 e⁻.

Lors du fonctionnement d'une batterie lithium-air, il se forme une couche de passivation à la surface de l'électrode négative en regard du film formant l'électrolyte. Cette couche de passivation est constituée essentiellement par Li₂O, LiOH et Li₂CO₃. Cette couche a pour effet favorable de limiter la formation de dendrites sur l'électrode négative, les dendrites risquant de percer le film formant l'électrolyte. Toutefois, l'épaisseur de cette couche de passivation augmente au cours des cyclages successifs, ce qui a pour résultat une perte de capacité de la batterie dans le temps.

JP2010198798 décrit une batterie comprenant une cathode, une anode et un électrolyte, la cathode comprenant une région hydrophile et une région hydrophobe.

WO2010061451 décrit une batterie à air comprenant un électrolyte non aqueux, qui contient un sel de sulfonimide, et une électrode à air comprenant une matière carbonée.

### SOMMAIRE

Un objet de la présente invention est de fournir une batterie lithium-air dans laquelle la perte de capacité est plus faible que dans les batteries lithium-air de l'art antérieur, ainsi qu'un procédé pour l'élaboration de ladite batterie.

Une batterie selon l'invention, dite lithium-air, comprend une électrode négative et une électrode positive séparées par un électrolyte. L'électrode négative est constituée par un film de matériau métallique choisi parmi le lithium et les alliages de lithium. L'électrode positive comprend un film de matériau carboné poreux sur un collecteur de courant et l'électrolyte est une solution d'un sel de lithium dans un solvant polymère, ledit électrolyte comprenant en outre un liquide ionique hydrophobe. Elle est caractérisée en ce que la surface de l'électrode négative en regard de l'électrolyte porte une couche de passivation qui contient essentiellement Li₂S et/ou Li₂S₂O₄ et éventuellement Li₂O et Li₂CO₃, et la teneur en soufre augmente dans l'épaisseur de ladite couche de passivation, depuis la face en contact avec le film de matériau métallique jusqu'à la face en contact avec l'électrolyte.

La présence de S est constatée par une analyse par MET. La présence éventuelle de Li₂O et Li₂CO₃ est constatée par analyse XPS.

Le procédé de la présente invention pour l'élaboration d'une batterie comprenant une électrode négative et une électrode positive séparées par un électrolyte, dans laquelle l'électrode négative est constituée par un film de matériau métallique choisi parmi le lithium et les alliages de lithium, l'électrode positive comprend un film de matériau carboné poreux sur un collecteur de courant et l'électrolyte est une solution d'un sel de lithium dans un solvant polymère, ledit électrolyte comprenant en outre un liquide ionique hydrophobe, consiste à élaborer l'électrode positive, l'électrolyte et un film du matériau métallique destiné à former l'électrode négative, et à assembler l'électrode positive, l'électrolyte et le film de matériau métallique. Il est caractérisé en ce qu'il comprend une étape consistant à soumettre le film de matériau métallique à une atmosphère gazeuse contenant SO₂.

### DESCRIPTION DÉTAILLÉE DE L'INVENTION

Dans une batterie lithium-air selon l'invention, on utilise un film de matériau métallique constitué par du lithium ou par un alliage de lithium contenant au moins 90% en masse de lithium pour l'élaboration de l'électrode négative. Le film dudit matériau métallique a de préférence une épaisseur entre 10 et 500 µm. L'alliage de lithium peut être par exemple un alliage de Li-Al, Li-Mg, Li-Al-Mg, Li-Zn, ou Li-Si, ou un nitrure de lithium.

Après traitement par SO₂, le film de lithium ou d'alliage de lithium porte à sa surface, une couche de passivation contenant essentiellement Li₂S et/ou Li₂S₂O₄ et éventuellement Li₂O et Li₂CO₃ et la teneur en soufre augmente dans l'épaisseur de ladite couche de passivation, depuis la face en contact avec le film de matériau métallique jusqu'à la face en contact avec l'électrolyte.

Le traitement du film de matériau métallique destiné à former l'électrode négative d'une batterie lithium-air selon la présente invention est effectué en mettant le film de matériau métallique en contact avec un mélange gazeux contenant SO₂. Ladite atmosphère gazeuse contient essentiellement SO₂, le complément étant constitué par un gaz inerte, en particulier l'azote. De préférence, l'atmosphère gazeuse qui entoure le film de matériau métallique à traiter contient au moins 0,1 cm³ de SO₂ par cm² de surface de métal (lithium ou alliage de lithium) à traiter, étant entendu que la vitesse de réaction de SO₂ avec le lithium augmente avec la teneur en SO₂ de ladite atmosphère. Une teneur de 1 à 10 cm³ par cm² de métal est particulièrement avantageuse.

Le traitement du matériau métallique par SO₂ est effectué à une température entre 0°C et 120°C. Il est avantageusement mis en œuvre à la température ordinaire, en particulier de 15°C à 30°C.

Le contact entre le matériau métallique et le mélange gazeux contenant SO₂ est maintenu pendant une durée suffisante pour obtenir une couche de passivation ayant une épaisseur de 1 nm à 1 µm. Cette durée dépend essentiellement de la température à laquelle la réaction est effectuée, et de la teneur en SO₂ du mélange gazeux. La détermination de la durée est à la portée de l'homme de métier, lorsque la teneur en SO₂ et la température sont déterminées.

Dans un premier mode de réalisation, le film de matériau métallique destiné à former l'électrode négative de la batterie lithium-air selon l'invention est traité par SO₂ avant son assemblage aux autres éléments de la batterie. Le traitement est alors effectué dans une enceinte anhydre, et le film obtenu après le traitement doit être conservé et manipulé (notamment lors de l'assemblage de la batterie) dans une atmosphère anhydre.

Dans un deuxième mode de réalisation, le film de matériau métallique est traité par SO₂ après son assemblage avec l'électrode positive et l'électrolyte. Dans ce deuxième mode de réalisation, on assemble un film de matériau métallique, un film d'électrolyte et l'électrode positive, on introduit l'assemblage dans une enveloppe qui comprend des moyens pour les entrées et les sorties de courant, ainsi que des moyens pour introduire une atmosphère gazeuse, on scelle l'enveloppe, on y injecte un mélange gazeux contenant SO₂ que l'on maintient. Ensuite, on déconnecte les moyens d'introduction du mélange gazeux et l'on scelle à nouveau l'enveloppe.

L'enveloppe peut être une enveloppe souple dite « métalloplastique », constituée par une feuille comprenant des films plastiques et des films métalliques alternés. Pour une batterie dite « pile bouton », l'enveloppe est une capsule métallique qui comprend d'une part un fond muni de perforations et solidaire de la périphérie formant le pôle positif, et d'autre part un couvercle formant le pôle négatif.

Selon un 3^{ème} mode de réalisation, on élabore une batterie en continu, à partir d'un film de matériau métallique, d'un film formant l'électrolyte et d'un film formant l'électrode positive, en faisant passer lesdits films dans une atmosphère gazeuse contenant SO₂ dans le dispositif dans lequel ils sont assemblés et à l'entrée dudit dispositif. Le film de matériau métallique est ainsi traité avant et pendant son assemblage au film formant l'électrode positive et au film formant l'électrolyte. Un procédé par co-laminage sous atmosphère de SO₂ est particulièrement intéressant pour assembler les constituants de la batterie en continu. Dans ce mode opératoire, le film de matériau métallique est laminé pour être amené à son épaisseur finale, il est soumis à une atmosphère de SO₂ à la sortie du laminoir, puis il est co-laminé avec le film formant l'électrolyte et le film formant l'électrode positive dans une atmosphère de SO₂. Lorsque le matériau métallique destiné à former l'électrode négative est du lithium, ce mode opératoire est particulièrement avantageux. Le lithium a une grande sensibilité à l'oxygène de sorte qu'un film de lithium « vif » dépourvu de couche de passivation est très difficile à obtenir et à conserver. Un film de lithium porte sa surface une couche de passivation dite « naturelle » constituée essentiellement par Li₂O, Li₂CO₃ et éventuellement LiOH, cette couche de passivation ayant des effets néfastes sur la capacité d'une batterie dans laquelle le film de lithium est utilisé comme électrode négative. Le laminage d'un film de lithium comportant une couche de passivation « naturelle » a pour effet de supprimer ladite couche de passivation. Lorsque le laminage est effectué dans une atmosphère de SO₂, ou lorsque le film de lithium laminé entre immédiatement dans une atmosphère de SO₂ à la sortie du laminoir, il se forme à la surface du film de lithium laminé des composés de soufre Li₂S et Li₂SO₄ qui empêchent ou tout au moins limitent de manière substantielle la formation de Li₂O ou de Li₂CO₃. Dans tous les cas, la face de la couche de passivation en contact avec le film de lithium est moins riche en composés soufrés que la face en contact avec l'électrolyte. Un procédé consistant à assembler le film d'électrode négative, le film d'électrolyte et le film de l'électrode positive par co-laminage sous atmosphère de SO₂ est de ce fait particulièrement avantageux, notamment lorsque le film d'anode est un film de lithium.

Dans les divers modes de réalisation décrits ci-dessus, la batterie obtenue est prête à fonctionner.

L'électrode positive d'une batterie lithium-air selon la présente invention est constituée par un matériau poreux déposé sur un collecteur de courant, ledit matériau poreux comprenant du carbone qui a une surface spécifique élevée, de préférence supérieure à 10 m²/g, plus particulièrement supérieure à 1000 m²/g. On peut utiliser en particulier des noirs de carbone commercialisés sous les dénominations Ketjen Black® ou Noir de Shawinigan®.

Le matériau de l'électrode positive peut contenir en outre un liant polymère. Le liant peut être un polymère solvatant choisi parmi les polymères qui sont utilisables comme solvants d'un électrolyte, par exemple les homopolymères d'oxyde d'éthylène et les copolymères d'oxyde d'éthylène. Le liant peut également être un polymère non solvatant, par exemple un copolymère styrène butadiène, ou un polymère fluoré tel qu'un poly fluorovinylidène (PVDF), un poly hexafluoropropylène (HPP), un copolymère PVDF-HFP, ou un poly tétrafluoroéthylène (PTFE).

Le matériau poreux peut aussi contenir un agent de conductivité électronique, qui peut être un matériau carboné ayant une conductivité électronique supérieure à celle du carbone poreux utilisé pour la matrice de l'électrode positive. Cet agent de conductivité électronique peut être choisi parmi les graphites naturels ou synthétiques, les nanotubes de carbone, les fibres de carbone, en particulier des fibres dites VGCF®.

De préférence, lors de la préparation du matériau poreux en vue de l'élaboration de l'électrode positive, on ajoute au carbone un composé capable de catalyser la réaction O₂ → O₂²⁻. Comme exemple de catalyseur, on peut citer les oxydes de métaux, en particulier MnO₂, CoO₂, V₂O₅, et les métaux, en particulier Pd, Pt et Rh ou leurs mélanges.

Un matériau destiné à former l'électrode positive d'une batterie lithium - air comprend de 60 à 99% d'un matériau carboné à surface spécifique élevée ; de 0 à 25% d'un liant polymère ; de 0 à 10% d'un agent de conductivité électronique. Ledit matériau contient de préférence en outre de 0,1 à 10% d'un catalyseur.

Un électrolyte d'une batterie lithium-air est décrit qui est constitué par un sel de lithium en solution dans un solvant liquide éventuellement gélifié par addition d'un polymère, ou dans un solvant polymère éventuellement plastifié.

Le sel de lithium utilisé pour l'électrolyte peut être choisi parmi les sels de lithium classiquement utilisés dans les batteries au lithium et les batteries aux ions lithium. On peut citer à titre d'exemple, les sels de lithium d'un anion à charge délocalisée, choisi dans le groupe constitué par les anions Br⁻, ClO₄⁻, et AsF₆⁻, et les anions répondant à l'une des formules R_{F}SO₃⁻, (R_{F}SO₂)₂N⁻, (R_{F}SO₂)₃C⁻, C₆H₍₆₋ₓ₎(CO(CF₃SO₂)₂C⁻)ₓ ou C₆H₍₆₋ₓ₎(SO₂(CF₃SO₂)₂C⁻)ₓ, dans lesquelles 1≤x≤4 et R_{F} représente F, un groupement perfluoroalkyle ayant de préférence de 1 à 5 atomes de carbone ou un groupe perfluoroaryle ayant de préférence de 5 à 12 atomes de carbone. On peut citer en particulier (FSO₂)₂N⁻Li⁺, (CF₃SO₂)₂N⁻Li⁺, et CF₃SO₃⁻Li⁺.

Un électrolyte liquide est obtenu en dissolvant le sel de lithium dans un solvant liquide qui peut être un solvant aprotique polaire ou un liquide ionique. On utilise dans ce cas de préférence un séparateur poreux imprégné par l'électrolyte liquide. De manière classique, le séparateur peut être un film de polyéthylène ou de polypropylène.

Le solvant aprotique polaire peut être choisi notamment dans le groupe constitué par les éthers linéaires et les éthers cycliques, les esters, les nitriles, les dérivés nitrés, les amides, les sulfones, les sulfolanes, les alkylsulfamides et les hydrocarbures partiellement halogénés. Les solvants particulièrement préférés sont le diéthyléther, le diméthoxyéthane, le glyme, le tétrahydrofurane, le dioxane, le diméthyltétrahydrofurane, le formiate de méthyle ou d'éthyle, le carbonate de propylène ou d'éthylène, les carbonates d'alkyles (notamment le carbonate de diméthyle, le carbonate de diéthyle et le carbonate de méthylpropyle), les butyrolactones, l'acétonitrile, le benzonitrile, le nitrométhane, le nitrobenzène, la diméthylformamide, la diéthylformamide, la N-méthylpyrrolidone, la diméthylsulfone, la tétraméthylène sulfone et les tétraalkylsulfonamides ayant de 5 à 10 atomes de carbone.

Le solvant liquide peut être constitué par un liquide ionique. Par liquide ionique, on entend un composé qui ne contient que des anions et des cations qui compensent leurs charges, et qui est liquide à la température de fonctionnement de la batterie. On peut citer notamment les sels qui ont :
- un cation ammonium, phosphonium, sulfonium, iodonium, pyridinium, pyrazolium, acétamidinium, oxazolium, thiazolium, pyrrolodinium, pipéridinium, imidazolium, ou guanidinium, et
- un anion choisi parmi
   * les anions Cl, Br, I, N(CN)₂⁻, C(CN)₃⁻, [(C₂O₄)₂B]⁻;
   * les anions sulfonate, sulfinate, phosphinate, ou phosphonate portant au moins un groupe alkyle ou perfluoroalkyle,
   * les anions BF₄⁻ et PF₆⁻ dans lesquels au moins l'un des atomes F est éventuellement remplacé par un groupe fluoroalkyle,
   * fluoroalkyle carbonate, fluoroalkylsulfonate, bis(fluorosulfonyl)imidure, bis(trifluoroalkylsulfonyl)imidure, bis(trifluoroalkylsulfonyl)méthylure, tris(trifluoroalkylsulfonyl)méthylure, et les anions dérivés de perfluoroalkylmalononitrile.

Selon l'invention, les liquides ioniques hydrophobes sont utilisés. A titre d'exemples, on peut citer les composés suivants :
- bis-(trifluorométhanesulfonyl)imide de 1-éthyl-3-méthylimidazolium (EMI-TFSI) ;
- fluorosulfonylimidure de pyridinium ;
- bis(fluorosulfonyl)imide de *N*-butyl-*N*-méthylpyrrolidinium (PYR₁₄FSI) ;
- bis(fluorosulfonyl)imide de *N*-propyl-*N*-méthylpyrrolidinium (PYR₁₃FSI) ;
- bis(trifluoromethansulfonyl)imide de *N*-butyl-*N*-méthylpyrrolidinium (PYR₁₄TFSI) ;
- bis(trifluoromethansulfonyl)imide de *N*-propyl-*N*-méthylpyrrolidinium (PYR₁₃TFSI) ;
- bis-(trifluorométhanesulfonyl)imide de 1-octylpyridinium [OPYR]⁺-TFSI⁻
- bis-(trifluorométhanesulfonyl)imide de 1-octyl-2-méthylpyridinium [2MOPYR]⁺-TFSI⁻,
- bis-(trifluorométhanesulfonyl)imide de 1-octyl-4-méthylpyridinium [4MOPYR]⁺-TFSI⁻.

L'électrolyte liquide est de préférence une solution dans laquelle la teneur en sel de lithium est de 0,1 à 2,5 Mole /L.

Un électrolyte polymère selon l'invention peut être obtenu en dissolvant le sel de lithium dans un polymère solvatant.

Le polymère solvatant peut être un polymère réticulé ou non, portant ou non des groupes ioniques greffés. Un polymère solvatant est un polymère qui comporte des unités récurrentes solvatantes contenant au moins un hétéroatome choisi parmi le soufre, l'oxygène, l'azote et le fluor. A titre d'exemple de polymères solvatants, on peut citer les polyéthers de structure linéaire, peigne ou à blocs, formant ou non un réseau, à base de poly(oxyde d'éthylène), ou les copolymères contenant le motif oxyde d'éthylène ou oxyde de propylène ou allylglycidyléther, les polyphosphazènes, les réseaux réticulés à base de polyéthylène glycol réticulé par des isocyanates ou les réseaux obtenus par polycondensation et portant des groupements qui permettent l'incorporation de groupements réticulables. On peut également citer les copolymères à blocs dans lesquels certains blocs portent des fonctions qui ont des propriétés rédox. Bien entendu, la liste ci-dessus n'est pas limitative, et tous les polymères présentant des propriétés solvatantes peuvent être utilisés. Les polyéthers sont particulièrement préférés.

Dans un électrolyte polymère, la proportion de sel de lithium est choisie de préférence de telle sorte que le rapport molaire « unité solvatante / atome Li » soit entre 10 à 40, étant entendu que « unité solvatante » désigne l'unité récurrente solvatante contenant au moins un hétéroatome choisi parmi le soufre, l'oxygène, l'azote et le fluor, tel que définie précédemment. Lorsque le polymère solvatant est un poly(oxyde d'éthylène), le rapport molaire O/Li est de préférence entre 10 et 40.

La présence d'un polymère solvatant dans l'électrolyte limite de manière significative la réaction du lithium de l'anode avec de l'eau (c'est-à-dire la formation de LiOH) qui proviendrait par exemple de l'atmosphère qui entoure la batterie lithium-air et qui fournit l'oxygène nécessaire à son fonctionnement.

Le polymère peut éventuellement être plastifié par addition d'un solvant liquide, choisi parmi ceux qui peuvent être utilisés pour l'élaboration d'un électrolyte liquide. Lorsque l'électrolyte polymère contient un solvant liquide agissant en tant que plastifiant, la teneur en solvant liquide est de préférence inférieure à 10% en masse.

La présence d'un liquide ionique hydrophobe dans l'électrolyte d'une batterie au lithium, comme solvant principal ou comme agent de plastification d'un solvant polymère, selon l'invention empêche le contact de l'eau avec le lithium métallique. La combinaison polymère /liquide ionique évite la transformation du lithium métallique en LiOH, Li₂O ou Li₂CO₃. Cette propriété se traduit par une diminution substantielle de l'impédance initiale, une augmentation de la capacité initiale et la conservation de la capacité au cours du cyclage, indépendamment du fait que la batterie fonctionne dans une atmosphère d'air sec ou dans une atmosphère d'air humide.

Un solvant de l'électrolyte est décrit qui peut en outre être constitué par un mélange d'un solvant liquide aprotique choisi parmi les solvants liquides aprotiques cités ci-dessus et d'un polymère polaire comprenant des unités contenant au moins un hétéroatome choisi parmi le soufre, l'azote, l'oxygène et le fluor. A titre d'exemple d'un tel polymère polaire, on peut citer les polymères qui contiennent principalement des unités dérivées de l'acrylonitrile, du fluorure de vinylidène, de la N-vinylpyrrolidone ou du méthacrylate de méthyle. La proportion de liquide aprotique dans le solvant peut varier de 1% (correspondant à un polymère plastifié) à 99% (correspondant à un liquide gélifié).

Un électrolyte polymère gel est constitué de préférence par au moins 75% en masse d'une solution d'un sel de lithium dans un solvant liquide et au plus 25% en masse de polymère, et la solution de sel dans le solvant liquide a une teneur en sel entre 0,1 M et 2,5 M/L.

Dans un mode de réalisation, l'électrolyte de la batterie est une solution solide d'un sel de lithium dans un polymère solvatant. Les polyéthers à 3 ou 4 branches sont des polymères solvatants particulièrement préférés. La masse molaire du polymère n'est pas critique. On choisit de préférence un polymère ayant une masse molaire entre 1000 et 10⁶, par exemple d'environ 10000.

La présence d'un liquide ionique dans l'électrolyte selon l'invention dont le solvant est un polymère solvatant permet de diminuer l'impédance totale, d'augmenter la capacité initiale et le maintien de la capacité lors du fonctionnement de la batterie sous atmosphère d'air. L'addition d'un liquide ionique hydrophobe permet d'augmenter la capacité initiale et son maintien lors du fonctionnement, même en présence d'air humide.

L'addition d'oxydes inorganiques à l'électrolyte polymère permet d'améliorer les propriétés mécaniques de l'électrolyte et sa conductivité ionique, en particulier lorsque la teneur en oxyde est inférieure à 10% en masse. L'addition d'oxydes n'a pas d'effet négatif sur l'impédance et la capacité.

En outre, un électrolyte d'une batterie lithium-air est décrit qui peut en outre être constitué par une céramique, par exemple NaSiCoN, LiSiCoN, (Li₂S-P₂S₅), Li₂P₃O₁₂ ou (Li_{1,5}Al_{0,5}Ge_{1,5}(PO₄)_{3-0,05}Li₂O).

Lorsque l'électrolyte est une céramique, ou lorsque le solvant de l'électrolyte est un polymère sec, il est préférable de soumettre la batterie à un premier cyclage, au cours duquel le film de passivation se stabilise.

### EXEMPLES

La présente invention est illustrée plus en détail à l'aide des exemples suivants, auxquels elle n'est cependant pas limitée.

### Exemple 1

### Traitement de Lithium pas SO₂

On a préparé un film de lithium ayant une épaisseur de 38 µm par laminage d'un film de lithium de 250 µm fourni par FMC Corporation (USA).

On a ensuite prélevé un échantillon de 3 cm² sur le film de lithium obtenu par laminage et on l'a introduit dans un sac dit « métal-plastique » que l'on a ensuite scellé sous vide. A l'aide d'une seringue, on a introduit 10 cm³ de SO₂ dans le sac scellé et on a laissé en contact pendant une heure. On a ensuite placé le sac « métal plastique » dans une boîte à gants sous hélium, on en a extrait le film de lithium et assemblé avec un électrolyte comme suit :

Lithium/électrolyte/lithium.

L'électrolyte utilisé est une solution 1M de LiPF₆ dans un mélange 50/50 en volume de carbonate d'éthyle (EC) et de carbonate de diéthyle (DEC).

L'impédance a été mesurée par intermittence pendant une durée de 256 h après l'assemblage. L'impédance totale (qui résulte de la résistance ohmique, de la résistance d'interface et de la résistance diffusionnelle) est de 1000 Ω.

Un autre échantillon du film de lithium obtenu par laminage a été soumis au même traitement par SO₂. Une analyse XPS de l'échantillon traité par SO₂ montre que le film de lithium porte une couche de passivation comprenant Li₂O et Li₂CO₃. La présence de Li₂S et de Li₂S₂O₄ dans la couche de passivation est montrée par une analyse MET.

### Exemple 2 (comparatif)

### Traitement du lithium avec de l'air ayant un taux d'humidité de 55%

On a reproduit le mode opératoire de l'exemple 1, mais en injectant dans le sac « métal-plastique », 10 cm³ d'air ayant un taux d'humidité de 55, au lieu de 10 cm³ de SO₂.

L'impédance totale, mesurée de la même manière que dans l'exemple 1, est de 4000 Ω, c'est-à-dire quatre fois supérieure à celle de l'échantillon traité par SO₂. Cette valeur élevée est due à la réaction entre Li et l'humidité de l'air, qui forme LiOH et Li₂O.

### Exemples 3-10

### Utilisation d'un film de lithium comme anode d'une batterie au lithium.

On a élaboré plusieurs batteries du type « pile bouton », en assemblant les éléments suivants dans une capsule métallique qui comprend un fond muni de perforations et solidaire de la périphérie formant le pôle positif et un couvercle formant le pôle négatif. Les électrodes négatives des différentes batteries sont identiques, de même que les électrodes positives.

L'électrode négative est un film de lithium ayant une surface de 3 cm², prélevé sur un film de lithium traité selon l'exemple 1.

L'électrode positive est un film d'un matériau composite ayant une épaisseur de 50 µm déposé sur une grille d'aluminium ayant une épaisseur de 20 µm servant de collecteur de courant, ledit matériau composite étant constitué par un mélange de MnO₂, de carbone et PVDF en tant que liant dans un rapport en poids de 10/70/20.

L'électrolyte de chaque batterie est une solution d'un sel de lithium dans un solvant. Différents électrolytes ont été utilisés. Pour la préparation des électrolytes, on a utilisé les composés suivants :
- (FSO₂)₂N⁻Li⁺ (LiFSI) ou (CF₃SO₂)₂N⁻Li⁺ (LiTFSI) en tant que sel de lithium ;
- un mélange 50/50 carbonate d'éthyle (EC) / carbonate de diéthyle (DEC) en tant que solvant liquide, imprégnant un séparateur en polypropylène ;
- un polyéther à 4 branches (PE4) ayant une masse molaire de 10000,
- le bis(fluorosulfonyl)imide de N-propyl-N-méthylpyrrolidinium (PYR₁₃FSI) en tant que liquide ionique.

Dans les exemples 3 à 4, l'électrolyte est une solution 0,5 M de LiFSI dans un mélange comprenant 10 parties en poids de polymère PE4 et 90 parties en poids de liquide ionique PYR₁₃FSI contenant 0,5 M/L de LiFSI.

Dans l'exemple 5 comparatif, l'électrolyte est une solution 1M de LiPF₆ dans EC/DEC 50/50.

Dans les exemples 6 et 7 comparatifs, l'électrolyte est une solution solide de LiTFSI dans un polymère PE4, avec un rapport O/Li de 20/1, Li étant le nombre d'atomes de Li apportés par LiTFSI et O le nombre d'atomes d'oxygène du polyéther.

Dans l'exemple 8 comparatif, l'électrolyte est une solution de LiTFSI dans un polymère PE4, avec un rapport O/Li de 20/1, contenant en outre TiO₂, Al₂O₃ et SiO₂, chacun des oxydes représentant 5% en poids par rapport au poids total de l'électrolyte.

Dans les exemples 9 et 10, l'électrolyte est une solution 0,5 M de LiFSI dans un mélange comprenant 10 parties en poids de polymère PE4 et 90 parties en poids de liquide ionique PYR₁₃FSI contenant 0,5 M/L de LiFSI, contenant en outre TiO₂, Al₂O₃ et SiO₂, chacun des oxydes représentant 5% en poids par rapport au poids total de l'électrolyte.

Le fond de la capsule comprend des perforations afin que l'oxygène de l'air, qui participe à la réaction sur la base de laquelle la batterie fonctionne, puisse pénétrer dans la batterie. La pile bouton assemblée est placée dans un récipient étanche dont le couvercle est muni de dispositifs pour l'entrée et la sortie de gaz, ainsi que de dispositifs pour le passage de conduits électriques reliés à la pile bouton.

Pour chacune des batteries, on a ensuite injecté un gaz dans le récipient et on a mesuré l'impédance de manière intermittente jusqu'à 256 heures.

Après stabilisation, chacune des batteries a été chargée et déchargée entre 2 V et 4V avec un courant de 0,1 mA/cm², et on a déterminé la capacité réversible C₀, et la capacité réversible résiduelle C₅ après 5 cycles, les deux exprimées en mAh/g de carbone.

Les mesures ont été effectuées avec des atmosphères différentes dans les piles boutons. Le tableau suivant donne les caractéristiques particulières des différentes piles boutons (constitution de l'électrolyte et atmosphère dans la capsule), ainsi que l'impédance totale I_{T}(en ohm), la capacité réversible initiale C₀ et la capacité réversible C₅ après le 5^{ème} cycle (en mA.h par gramme de carbone).

| Ex. selon l'invention ou comparatif | Electrolyte | Atmosphère | I_{T} | C₀ | C₅ |
|---|---|---|---|---|---|
| 3 | solution 0,5 M de LiFSI dans un solvant polymère constitué par Py13- FSI + 10 polymère 4 branches | Air sec | 650 | 3700 | 3650 |
| 4 | solution 0,5 M de LiFSI dans un solvant polymère constitué par Py13- FSI + 10 polymère 4 branches | Air à 55% d'humidité | 645 | 3750 | 3675 |
| 5 | solution 1M de LiPF₆ dans EC/DEC 50/50 | Air à 55% d'humidité | 2907 | 1905 | 450 |
| 6 | LiTFSI + polyéther 4 branches, O/Li = 20/1 | Air sec | 1200 | 2550 | 2500 |
| 7 | LiTFSI + polyéther 4 branches, O/Li = 20/1 | Air à 55% d'humidité | 2200 | 1800 | 390 |
| 8 | LiTFSI + polyéther 4 branches, O/Li = 20/1 + 5% TiO₂ + 5% Al₂O₃ + 5% SiO₂ | Air sec | 1100 | 2590 | 2580 |
| 9 | solution 0,5 M de LiFSI dans un solvant polymère constitué par Py13- FSI + 10 polymère 4 branches + 5% TiO₂ + 5% Al₂O₃ + 5% SiO₂ | Air sec | 625 | 3900 | 3850 |
| 10 | solution 0,5 M de LiFSI dans un solvant polymère constitué par Py13- FSI + 10 polymère 4 branches + 5% TiO₂ + 5% Al₂O₃ + 5% SiO₂ | Air à 55% d'humidité | 650 | 3851 | 3825 |

La comparaison des résultats des exemples 3 à 4 montre que, dans une batterie selon l'invention dans laquelle l'électrolyte contient un liquide ionique hydrophobe, la capacité réversible initiale est élevée et elle est stable lors d'un fonctionnement comprenant une succession de cycles décharge-charge (cyclage), en atmosphère sèche ou humide.

Les performances électrochimiques sont inférieures dans l'exemple 5 comparatif à cause de la présence de l'eau dans l'atmosphère dans laquelle se trouve la pile bouton et du fait que l'électrolyte ne contient pas de polymère qui empêcherait ou tout au moins limiterait la réaction du lithium avec l'eau pour former LiOH, Li₂O ou Li₂CO₃.

La comparaison des résultats d'un cyclage sous air humide (exemples 4, 5, 7 et 10) montre qu'un électrolyte liquide ou un électrolyte polymère ne contenant pas de liquide ionique donne une capacité initiale plus faible qui de surcroît diminue fortement au cours du cyclage.

La comparaison des résultats d'un cyclage sous air sec (exemples 3, 8 et 9) montre qu'un électrolyte polymère confère à la pile bouton de l'invention stabilité au cyclage, la capacité initiale étant plus élevée lorsque l'électrolyte polymère contient un composé « liquide ionique ».

## Revendications

1. Procédé pour l'élaboration d'une batterie lithium air comprenant une électrode négative et une électrode positive séparées par un électrolyte, dans laquelle l'électrode négative est constituée par un film de matériau métallique choisi parmi le lithium et les alliages de lithium, l'électrode positive comprend un film de matériau carboné poreux sur un collecteur de courant et l'électrolyte est une solution d'un sel de lithium dans un solvant polymère , ledit électrolyte comprenant en outre un liquide ionique hydrophobe, ledit procédé consistant à élaborer l'électrode positive, l'électrolyte et un film du matériau métallique destiné à former l'électrode négative, et à assembler l'électrode positive, l'électrolyte et le film de matériau métallique, **caractérisé en ce qu'**il comprend une étape consistant à soumettre le film de matériau métallique à une atmosphère gazeuse contenant SO₂.

2. Procédé selon la revendication 1, **caractérisé en ce que** le film de matériau métallique a une épaisseur entre 10 et 500 µm.

3. Procédé selon la revendication 1, **caractérisé en ce que** le matériau métallique est constitué par un alliage de lithium contenant au moins 90% en masse de de lithium, choisi parmi les alliages Li-Al, Li-Mg, Li-Al-Mg, Li-Zn, ou Li-Si, et le nitrure de lithium.

4. Procédé selon la revendication 1, **caractérisé en ce que** l'atmosphère gazeuse contient SO₂ et éventuellement un gaz inerte.

5. Procédé selon la revendication 1, **caractérisé en ce que** l'atmosphère gazeuse contient au moins 0,1 cm³ de SO₂ par cm² de surface de matériau métallique à traiter.

6. Procédé selon la revendication 5, **caractérisé en ce que** l'atmosphère gazeuse contient de 1 à 10 cm³ de SO₂ par cm² de matériau métallique.

7. Procédé selon la revendication 1, **caractérisé en ce que** le traitement du matériau métallique par SO₂ est effectué à une température entre 15°C à 30°C.

8. Procédé selon la revendication 1, **caractérisé en ce que** le film de matériau métallique destiné à former l'électrode négative est traité par SO₂ avant son assemblage aux autres éléments de la batterie, dans une enceinte anhydre.

9. Procédé selon la revendication 1, **caractérisé en ce que** le film de matériau métallique est traité par SO₂ après son assemblage avec l'électrode positive et l'électrolyte.

10. Procédé selon la revendication 1, **caractérisé en ce que** le film de matériau métallique est traité par SO₂ pendant et après son assemblage avec le film matériau carboné poreux de l'électrode positive et un film formant l'électrolyte.

11. Procédé selon la revendication 10, **caractérisé en ce que** l'on fait passer le film de matériau métallique, le film formant l'électrolyte et le film de matériau carboné poreux de l'électrode positive, dans un dispositif dans lequel ils sont assemblés, en maintenant une atmosphère de SO₂ à l'entrée dudit dispositif et dans le dispositif.

12. Procédé selon la revendication 11, **caractérisé en ce que** le film de matériau métallique est laminé pour être amené à son épaisseur finale, il est soumis à une atmosphère de SO₂ à la sortie du laminoir, puis il est co-laminé avec le film formant l'électrolyte et le film de matériau carboné poreux de l'électrode positive dans une atmosphère de SO₂.

13. Batterie lithium-air comprenant une électrode négative et une électrode positive séparées par un électrolyte, dans laquelle l'électrode positive comprend un matériau carboné poreux sur un collecteur de courant, l'électrolyte est une solution d'un sel de lithium dans un solvant polymère, ledit électrolyte comprenant en outre un liquide ionique hydrophobe, et l'électrode négative est constituée par un film d'un matériau métallique choisi parmi le lithium et les alliages de lithium, **caractérisée en ce que** la surface de l'électrode négative en regard de l'électrolyte porte une couche de passivation contenant Li₂S et/ou Li₂S₂O₄, et éventuellement Li₂O et Li₂CO₃, et la teneur en soufre augmente dans l'épaisseur de ladite couche de passivation, depuis la face en contact avec le film de matériau métallique jusqu'à la face en contact avec l'électrolyte.

14. Batterie selon la revendication 13, **caractérisée en ce que** le matériau carboné poreux est un carbone qui a une surface spécifique supérieure à 10 m²/g.

15. Batterie selon la revendication 13, **caractérisée en ce que** le matériau carboné poreux contient en outre un liant polymère, un agent de conductivité électronique, ou les deux.

16. Batterie selon la revendication 13, **caractérisée en ce que** le matériau carboné poreux contient au moins un catalyseur, choisi parmi les oxydes MnO₂, CoO₂, et V₂O₅, et les métaux, Pd, Pt et Rh.

17. Batterie selon la revendication 13, **caractérisée en ce que** le solvant polymère est un polyéther à 3 ou 4 branches.

18. Batterie selon la revendication 13, **caractérisée en ce que** l'électrolyte polymère contient au moins un oxyde inorganique.

19. Batterie selon la revendication 13, **caractérisée en ce que** le liquide ionique est choisi parmi le bis-(trifluorométhane- sulfonyl)imide de 1-éthyl-3-méthylimidazolium ; le fluorosulfonylimidure de pyridinium ; le bis(fluorosulfonyl)imide de N-butyl-N-méthylpyrrolidinium ; le bis(fluorosulfonyl)imide de N-propyl-N-méthylpyrrolidinium ; le bis(trifluorométhan- esulfonyl)imide de N-butyl-N-méthylpyrrolidinium ; le bis(trifluorométhane- sulfonyl)imide de N-propyl-N-méthylpyrrolidinium ; le bis-(trifluorométhanee- sulfonyl)imide de 1-octylpyridinium ; le bis-(trifluorométhanesulfonyl)imide de 1-octyl-2-méthylpyridinium ; le bis-(trifluorométhanesulfonyl)imide de l-octyl-4-méthylpyridinium.

## Patentansprüche

1. Verfahren zur Herstellung einer Lithium-Luft-Batterie, umfassend eine negative Elektrode und eine positive Elektrode, die durch einen Elektrolyten getrennt sind, wobei die negative Elektrode aus einem Film eines metallischen Materials, ausgewählt aus Lithium und Lithiumlegierungen, zusammengesetzt ist, die positive Elektrode einen Film eines porösen Kohlenstoffmaterials auf einem Stromkollektor umfasst und der Elektrolyt eine Lösung eines Lithiumsalzes in einem Polymer-Lösungsmittel ist, wobei der Elektrolyt weiterhin eine hydrophobe ionische Flüssigkeit umfasst, wobei das Verfahren aus dem Herstellen der positiven Elektrode, des Elektrolyten und eines Films eines metallischen Materials, das die negative Elektrode bilden soll, und dem Zusammenbauen der positiven Elektrode, des Elektrolyten und des Films eines metallischen Materials besteht, **dadurch gekennzeichnet, dass** es einen Schritt umfasst, der darin besteht, den Film eines metallischen Materials einer gasförmigen Atmosphäre, die SO₂ enthält, auszusetzen.

2. Verfahren gemäß Anspruch 1, **dadurch gekennzeichnet, dass** der Film eines metallischen Materials eine Dicke zwischen 10 und 500 µm aufweist.

3. Verfahren gemäß Anspruch 1, **dadurch gekennzeichnet, dass** das metallische Material aus einer Lithiumlegierung zusammengesetzt ist, die mindestens 90 Gewichts-% Lithium enthält, ausgewählt aus Li-Al-, Li-Mg-, Li-Al-Mg-, Li-Zn- oder Li-Si-Legierungen, und Lithiumnitrid.

4. Verfahren gemäß Anspruch 1, **dadurch gekennzeichnet, dass** die gasförmige Atmosphäre SO₂ und gegebenenfalls ein Inertgas enthält.

5. Verfahren gemäß Anspruch 1, **dadurch gekennzeichnet, dass** die gasförmige Atmosphäre mindestens 0,1 cm³ SO₂ pro cm² der Oberfläche des zu behandelnden metallischen Materials enthält.

6. Verfahren gemäß Anspruch 5, **dadurch gekennzeichnet, dass** die gasförmige Atmosphäre 1 bis 10 cm³ SO₂ pro cm² metallischen Materials enthält.

7. Verfahren gemäß Anspruch 1, **dadurch gekennzeichnet, dass** die Behandlung des metallischen Materials mit SO₂ bei einer Temperatur zwischen 15 °C und 30° C durchgeführt wird.

8. Verfahren gemäß Anspruch 1, **dadurch gekennzeichnet, dass** der Film eines metallischen Materials, der die negative Elektrode bilden soll, vor dem Zusammenbau mit den anderen Elementen der Batterie in einem wasserfreien Gehäuse mit SO₂ behandelt wird.

9. Verfahren gemäß Anspruch 1, **dadurch gekennzeichnet, dass** der Film eines metallischen Materials nach seinem Zusammenbau mit der positiven Elektrode und dem Elektrolyten mit SO₂ behandelt wird.

10. Verfahren gemäß Anspruch 1, **dadurch gekennzeichnet, dass** der Film eines metallischen Materials während und nach seinem Zusammenbau mit dem Film eines porösen Kohlenstoffmaterials der positiven Elektrode und einem den Elektrolyten bildenden Film mit SO₂ behandelt wird.

11. Verfahren gemäß Anspruch 10, **dadurch gekennzeichnet, dass** der Film eines metallischen Materials, der den Elektrolyten bildende Film und der Film eines porösen Kohlenstoffmaterials der positiven Elektrode in eine Vorrichtung geführt werden, in der sie zusammengebaut werden, während eine SO₂-Atmosphäre am Eingang der Vorrichtung und in der Vorrichtung aufrechterhalten wird.

12. Verfahren gemäß Anspruch 11, **dadurch gekennzeichnet, dass** der Film eines metallischen Materials gewalzt wird, um auf seine endgültige Dicke gebracht zu werden, am Ausgang des Walzwerks einer SO₂-Atmosphäre ausgesetzt wird, dann mit dem Film, der den Elektrolyten bildet, und dem Film eines porösen Kohlenstoffmaterials der positiven Elektrode in einer SO₂-Atmosphäre zusammengewalzt wird.

13. Lithium-Luft-Batterie, umfassend eine negative Elektrode und eine positive Elektrode, die durch einen Elektrolyten getrennt sind, wobei die positive Elektrode ein poröses Kohlenstoffmaterial auf einem Stromkollektor umfasst, der Elektrolyt eine Lösung eines Lithiumsalzes in einem Polymer-Lösungsmittel ist, wobei der Elektrolyt weiterhin eine hydrophobe ionische Flüssigkeit umfasst, und die negative Elektrode aus einem Film eines metallischen Materials, das aus Lithium und Lithiumlegierungen ausgewählt ist, zusammengesetzt ist, **dadurch gekennzeichnet, dass** die dem Elektrolyten zugewandte Oberfläche der negativen Elektrode eine Passivierungsschicht trägt, die Li₂S und/oder Li₂S₂O₄ und gegebenenfalls Li₂O und Li₂CO₃ enthält, und der Schwefelgehalt in der Dicke der Passivierungsschicht von der mit dem Film eines metallischen Materials in Kontakt stehenden Seite zu der mit dem Elektrolyten in Kontakt stehenden Seite zunimmt.

14. Batterie gemäß Anspruch 13, **dadurch gekennzeichnet, dass** das poröse Kohlenstoffmaterial ein Kohlenstoff ist, der eine spezifische Oberfläche von mehr als 10 m²/g aufweist.

15. Batterie gemäß Anspruch 13, **dadurch gekennzeichnet, dass** das poröse Kohlenstoffmaterial ferner ein polymeres Bindemittel, ein elektronisches Leitfähigkeitsmittel oder beide enthält.

16. Batterie gemäß Anspruch 13, **dadurch gekennzeichnet, dass** das poröse Kohlenstoffmaterial mindestens einen Katalysator enthält, der aus den Oxiden MnO₂, CoO₂ und V₂O₅ und den Metallen Pd, Pt und Rh ausgewählt ist.

17. Batterie gemäß Anspruch 13, **dadurch gekennzeichnet, dass** das Polymer-Lösungsmittel ein Polyether mit 3 oder 4 Verzweigungen ist.

18. Batterie gemäß Anspruch 13, **dadurch gekennzeichnet, dass** der Polymer-Elektrolyt mindestens ein anorganisches Oxid enthält.

19. Batterie gemäß Anspruch 13, **dadurch gekennzeichnet, dass** die ionische Flüssigkeit aus 1-Ethyl-3-methylimidazolium-bis(trifluormethansulfonyl)-imid; Pyridiniumfluorsulfonylimid; N-Butyl-N-methylpyrrolidinium-bis-(fluorsulfonyl)imid; N-Propyl-N-methylpyrrolidinium-bis(fluorsulfonyl)-imid; N-Butyl-N-methylpyrrolidinium-bis(trifluormethansulfonyl)imid; N-Propyl-N-methylpyrrolidinium-bis(trifluormethansulfonyl)imid; 1-Octylpyridinium-bis(trifluormethansulfonyl)imid; 1-Octyl-2-methylpyridinium-bis(trifluormethansulfonyl)imid; 1-Octyl-4-methylpyridinium-bis(trifluormethansulfonyl)imid ausgewählt ist.

## Claims

1. A process for preparing a lithium-air battery comprising a negative electrode and a positive electrode separated by an electrolyte, wherein the negative electrode consists of a film of metallic material selected from lithium and lithium alloys, the positive electrode comprises a film of porous carbon material on a current collector and the electrolyte is a solution of a lithium salt in a polymer solvent, said electrolyte further comprising a hydrophobic ionic liquid, said process consisting in preparing the positive electrode, the electrolyte and a film of metallic material intended to form the negative electrode, and in assembling the positive electrode, the electrolyte and the film of metallic material, **characterized in that** it comprises a step consisting in subjecting the film of metallic material to a gaseous atmosphere containing SO₂.

2. The process according to claim 1, **characterized in that** the film of metallic material has a thickness between 10 and 500 µm.

3. The process according to claim 1, **characterized in that** the metallic material is constituted by a lithium alloy containing at least 90% by weight of lithium, selected from Li-AI, Li-Mg, Li-Al-Mg, Li-Zn, or Li-Si alloys, and lithium nitride.

4. The process according to claim 1, **characterized in that** the gaseous atmosphere contains SO₂ and optionally an inert gas.

5. The process according to claim 1, **characterized in that** the gaseous atmosphere contains at least 0.1 cm³ of SO₂ per cm² of surface area of metallic material to be treated.

6. The process according to claim 5, **characterized in that** the gaseous atmosphere contains from 1 to 10 cm³ of SO₂ per cm² of metallic material.

7. The process according to claim 1, **characterized in that** the treatment of the metallic material with SO₂ is carried out at a temperature between 15°C and 30°C.

8. The process according to claim 1, **characterized in that** the film of metallic material intended to form the negative electrode is treated with SO₂ before being assembled with the other elements of the battery, in an anhydrous enclosure.

9. The process according to claim 1, **characterized in that** the film of metallic material is treated with SO₂ after it is assembled with the positive electrode and the electrolyte.

10. The process according to claim 1, **characterized in that** the film of metallic material is treated with SO₂ during and after its assembly with the film of porous carbon material of the positive electrode and a film forming the electrolyte.

11. The process according to claim 10, **characterized in that** the film of metallic material, the film forming the electrolyte and the film of porous carbon material of the positive electrode are passed into a device in which they are assembled, while maintaining a SO₂ atmosphere at the entry to said device and in the device.

12. The process according to claim 11, **characterized in that** the film of metallic material is rolled to be brought to its final thickness, subjected to a SO₂ atmosphere at the exit of the rolling mill, then it is co-rolled with the film forming the electrolyte and the film of porous carbon material of the positive electrode in a SO₂ atmosphere.

13. A lithium-air battery comprising a negative electrode and a positive electrode separated by an electrolyte, wherein the positive electrode comprises a porous carbon material on a current collector, the electrolyte is a solution of a lithium salt in a polymer solvent, said electrolyte further comprising a hydrophobic ionic liquid, and the negative electrode is constituted by a film of a metallic material selected from lithium and lithium alloys, **characterized in that** the surface of the negative electrode facing the electrolyte bears a passivation layer containing Li₂S and/or Li₂S₂O₄, and optionally Li₂O and Li₂CO₃, and the sulfur content increases in the thickness of said passivation layer, from the face in contact with the film of metallic material to the face in contact with the electrolyte.

14. The battery according to claim 13, **characterized in that** the porous carbon material is a carbon that has a specific surface area greater than 10 m²/g.

15. The battery according to claim 13, **characterized in that** the porous carbon material further contains a polymer binder, an electronic conductivity agent, or both.

16. The battery according to claim 13, **characterized in that** the porous carbon material contains at least one catalyst, selected from MnO₂, CoO₂, and V₂O₅ oxides, and Pd, Pt and Rh metals.

17. The battery according to claim 13, **characterized in that** the polymer solvent is a polyether with 3 or 4 branches.

18. The battery according to claim 13, **characterized in that** the polymer electrolyte contains at least one inorganic oxide.

19. The battery according to claim 13, **characterized in that** the ionic liquid is selected from 1-ethyl-3-methylimidazolium bis(trifluoromethanesulfonyl)imide; pyridinium fluorosulfonylimide; N-butyl-N-methylpyrrolidinium bis(fluorosulfonyl)imide; N-propyl-N-methylpyrrolidinium bis(fluorosulfonyl)imide; N-butyl-N-methylpyrrolidinium bis(trifluoromethanesulfonyl)imide; N-propyl-N-methylpyrrolidinium bis(trifluoromethanesulfonyl)imide; 1-octylpyridinium bis(trifluoromethanesulfonyl)imide; 1-octyl-2-methylpyridinium bis(trifluoromethanesulfonyl)imide; 1-octyl-4-methylpyridinium bis-(trifluoromethanesulfonyl)imide.
